# EUROPÄISCHE PATENTANMELDUNG

(11) **EP 1 897 782 A2**
(43) Veröffentlichungstag der Anmeldung: **12.03.2008**
(21) Anmeldenummer: 07015371.3
(22) Anmeldetag: 06.08.2007
(51) Int. Cl.: B62B 3/14

(54) **Transportwagen**

(30) Priorität: 05.09.2006 DE 102006042051; 17.01.2007 DE 102007002441
(71) Anmelder: Wanzl Metallwarenfabrik GmbH, 89336 Leipheim (DE)
(72) Erfinder: Fischer, Reinhard, 89348 Kammeltal/Ettenbeuren (DE); Wagner, Christian, 87757 Kirchheim (DE)

(57) **Zusammenfassung**

Die Erfindung betrifft einen von Hand bewegbarer Transportwagen, mit einem Fahrgestell (2), wobei das Fahrgestell (2) eine Schiebeeinrichtung (4) und eine Plattform (5) aufweist, wobei das Fahrgestell (2) mit Rollen (3) ausgestattet ist.

Die Erfindung zeichnet sich dadurch aus, dass jeder Transportwagen (1) einen Bügel (6) aufweist und wobei der Bügel (6) wenigstens an zwei Stellen (9, 10) an einer Platte (8) und/oder der Plattform (5) ortsfest angeordnet ist.

## Beschreibung

Die Erfindung betrifft einen Transportwagen mit den Merkmalen im Oberbegriff des Hauptanspruchs.

Transportwagen dieser Gattung werden zum Transportieren von Ware, Gepäck oder anderen Gegenständen eingesetzt.

Das deutsche Gebrauchsmuster DE 298 06 825 beschreibt einen solchen von Hand bewegbaren Transportwagen. Er weist ein Fahrgestell auf, das mit Rollen ausgestattet ist. Am Fahrgestell ist eine Plattform vorgesehen. Diese ist zum Beladen von Ware oder anderen Gegenständen vorgesehen. Weiterhin ist am Fahrgestell eine Schiebeeinrichtung angeordnet. Diese ist aus zwei parallel angeordneten Holmen gebildet.

Schwierigkeiten treten jedoch dann auf, wenn ein beladener Wagen auf einem Fahrsteig steht. Da diese Fahrsteige mit einem Gefälle nach unten gebaut sind, kommt es immer wieder vor, dass Gegenstände vom Wagen in Richtung des Gefälles rutschen.

Die Aufgabe der Erfindung besteht darin, einen besseren Transportwagen aufzuzeigen.

Die Erfindung löst die Aufgabe mit den Merkmalen im kennzeichnenden Teil des Hauptanspruchs.

Ein großer Vorteil besteht darin, dass das Herunterrutschen der Waren durch den Bügel vermieden wird.

Weiterhin können Wagen mit einem solchen Bügel nachgerüstet werden.

Die Stapelbarkeit gleicher Wagen ist nicht beeinträchtigt.

Die Erfindung wird anhand von Ausführungsbeispielen näher erläutert. Es zeigt
Fig. 1 einen Transportwagen mit einem Bügel in 3-D-Darstellung;
Fig. 2 einen Bügel und
Fig. 3 zwei baugleiche Wagen mit Bügel ineinander gestapelt
Fig. 4 eine weiterführende Variante.

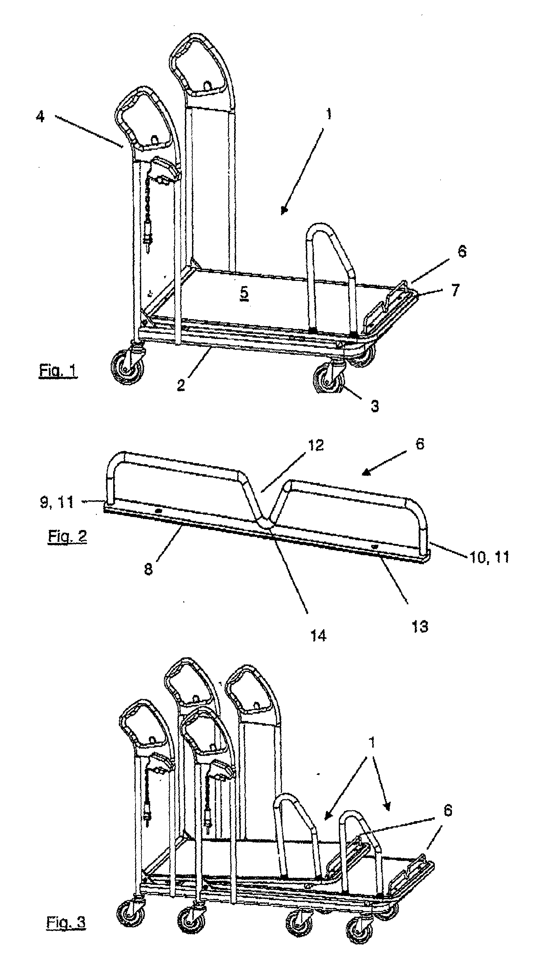

Fig. 1 zeigt einen von Hand bewegbaren Transportwagen 1. Dieser weist ein Fahrgestell 2 auf. Das Fahrgestell 2 ist mit einer Schiebeeinrichtung 4 und mit einer Plattform 5 versehen und mit Rollen 3 ausgestattet ist. Vorzugsweise ist die Plattform 5 aus Holz gebildet. Verschiedene andere Materialien sind denkbar.

Jeder Transportwagen 1 weist einen Bügel 6 auf. Der Bügel 6 ist wenigstens an zwei Stellen 9, 10 an einer Platte 8 und/oder der Plattform 5 ortsfest angeordnet. Die Platte 8 kann verschiedene Formen aufweisen. Vorzugweise ist sie aus einem Flachstahl gebildet, wobei die Enden der Platte 8 abgerundet sind.

Der Bügel 6 ist vorzugsweise aus einem Draht gefertigt. Der Durchmesser bleibt dem Fachmann überlassen. Jeder Bügel 6 ist an seinen Enden 11 ortsfest an der Platte 8 angeordnet ist. Hierfür kann jedes Ende 11 gebogen sein. Auch besteht die Möglichkeit, den Bügel 6 in die Platte 8 zu stecken und/oder anzuschweißen.

Vorzugsweise weist jeder Bügel 6 wenigstens eine Vertiefung 12 auf. Diese verhindert, dass Gegenstände durch den Abstand der zwischen Bügel 6 und Platte 8 besteht, herausrutschen. Diese Vertiefung 12 ist in der Mitte des Bügels 6 angeordnet. Es besteht aber auch die Möglichkeit, den Bügel 6 mit weiteren Vertiefungen 12 zu versehen. Jede Vertiefung 12 kann in Form eines "V" gebildet sein. Vorzugsweise berührt die untere Spitze 14 die Platte 8. Auch besteht die Möglichkeit die Spitze 14 ortsfest an der Platte 8 anzuordnen.

Jeder Bügel 6 ist wechselbar an der Plattform 5 angeordnet. Vorzugsweise ist der Bügel 6, wie in den Figuren 1 und 3 dargestellt, am vorderen Ende der Plattform 5 angeordnet.

Der Bügel 6 ist vorzugsweise mit Schrauben 7 an der Plattform 5 angeordnet ist. Dadurch können vorhandene Wagen 1 mit einem solchen Bügel 6 nachgerüstet werden. Die Platte 8 des Bügels 6 weist zum Anbringen Bohrungen 13 auf. Vorzugsweise ist jede Platte 8 mit zwei Bohrungen 13 versehen. Die Bohrungen 13 sind rechts und links, wie in Fig. 2 dargestellt, vorgesehen.

Die Stapelbarkeit gleicher Wagen 1 ist durch das Anbringen eines solchen Bügels 6 weiterhin gegeben, wie Fig. 2 zeigt.

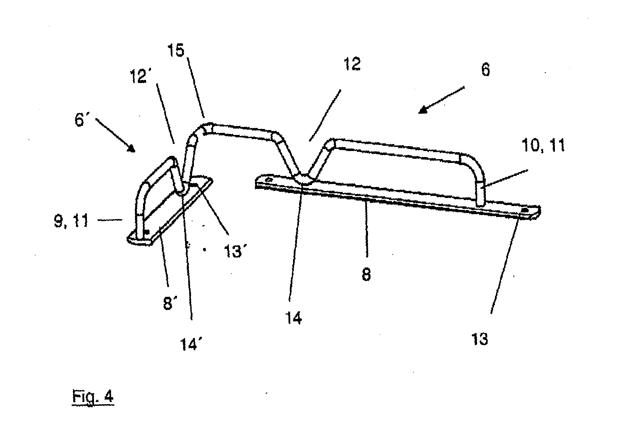

In einer weiterführenden Variante ist der Bügel 6 aus zwei Teilen 6, 6' gebildet. Diese Variante ist in Fig. 4 dargestellt. Dieser weitere Bügel 6' ist vorzugsweise in rechtem Winkel zu dem Bügel 6 angeordnet. Beide Bügel 6, 6' sind mittels eines Verbindungsteiles 15 miteinander verbunden. Es bietet sich an, eine ortsfeste Verbindung zwischen Bügel 6 und Verbindungsteil 15 bzw. zwischen Bügel 6' und Verbindungsteil 15 herzustellen. Auch eine wechselbare Verbindung wäre denkbar. Bei Verwendung eines Drahtes entspricht der Durchmesser des Drahtes des Verbindungsteiles 15 vorzugsweise dem Durchmesser des Drahtes des übrigen Bügels 6, 6'.

Die Höhe der Bügel 6, 6' ist gleich. Somit ist auch das Verbindungsteil 15 in dieser Höhe vorzusehen.

An dem zweiten Bügel 6' ist ebenfalls eine Spitze 14' vorgesehen. Diese verleiht dem Bügel 6' Stabilität und verhindert ein Verdrehen. Vorzugsweise ist die Spitze 14' ortsfest an einer weiteren Platte 8' angeordnet. Somit weist auch der Bügel 6' eine Vertiefung 12' auf. Diese Vertiefung 12' ist zweckmäßigerweise ähnlich der Vertiefung 12 des Bügels 6 gebildet.

Es wäre auch die Verwendung von nur einer Platte 8 denkbar, die dann auch im Bereich des Verbindungsteiles 15 angeordnet sein könnte. Das hätte den Vorteil einer einfacheren Befestigung des Bügels 6, 6' an der Plattform 5.

Die erste Stelle 9 des Endes 11 ist in dieser weiterführenden Variante an den Bügel 6' vorgesehen.

Auch Platte 8' ist mittels Schrauben 7 an der Plattform 5 angeordnet. Hierfür weist die Platte 8' Bohrungen 13' auf. Vorzugsweise sind zwei Bohrungen 13' vorgesehen.

An welcher Stelle der Bügel 6' an der Platte 8' angebracht ist, bleibt dem Fachmann überlassen, bzw. ist abhängig von den jeweiligen Anforderungen der verschiedenen Plattformen 5.

### Bezugszeichenliste

- 1: Transportwagen
- 2: Fahrgestell, Gestell
- 3: Rollen
- 4: Schiebeeinrichtung
- 5: Plattform
- 6: Bügel
- 7: Schrauben
- 8: Platte
- 9: erste Stelle/ zwei Stellen
- 10: zweite Stelle/ zwei Stellen
- 11: Ende des Bügels
- 12: Vertiefung
- 13: Bohrungen
- 14: Spitze
- 15: Verbindungsteil
- 6': weiterer Bügel
- 8': Platte
- 12': Vertiefung
- 13': Bohrungen
- 14': Spitze

## Patentansprüche

1. Von Hand bewegbarer Transportwagen, mit einem Fahrgestell (2), wobei das Fahrgestell (2) eine Schiebeeinrichtung (4) und eine Plattform (5) aufweist, wobei das Fahrgestell (2) mit Rollen (3) ausgestattet ist **dadurch gekennzeichnet, dass** jeder Transportwagen (1) einen Bügel (6) aufweist und wobei der Bügel (6) wenigstens an zwei Stellen (9, 10) an einer Platte (8) und/oder der Plattform (5) ortsfest angeordnet ist.

2. Von Hand bewegbarer Transportwagen nach Anspruch 1 **dadurch gekennzeichnet, dass** jeder Bügel (6) an seinen Enden (11) an der Platte (8) und/oder der Plattform (5) angeordnet ist.

3. Von Hand bewegbarer Transportwagen nach einem den Ansprüche 1 und 2 **dadurch gekennzeichnet, dass** jedes Ende (11) gebogen sein kann.

4. Von Hand bewegbarer Transportwagen nach den Ansprüche 1 bis 3 **dadurch gekennzeichnet, dass** jeder Bügel (6) wenigstens eine Vertiefung (12) aufweist.

5. Von Hand bewegbarer Transportwagen nach den Ansprüche 1 bis 4 **dadurch gekennzeichnet, dass** jeder Bügel (6) wechselbar an der Plattform (5) anzuordnen ist.

6. Von Hand bewegbarer Transportwagen nach den Ansprüchen 1 bis 5 **dadurch gekennzeichnet, dass** jeder Bügel (6) mit Schrauben (7) an der Plattform (5) angeordnet ist.
